(19) Europäisches Patentamt
European Patent Office
Office européen des brevets

(11) Veröffentlichungsnummer : **0 168 870**
**B1**

(12) # EUROPÄISCHE PATENTSCHRIFT

(45) Veröffentlichungstag der Patentschrift : **30.09.87**

(51) Int. Cl.[4] : **C 08 G 8/38**, C 09 D 3/54, D 06 P 1/56

(21) Anmeldenummer : **85201006.5**

(22) Anmeldetag : **12.06.85**

(54) **Verfahren zur Herstellung eines für Beschichtungsmittel geeigneten Bindemittels und dessen Verwendung.**

(30) Priorität : **15.06.84 DE 3422216**

(43) Veröffentlichungstag der Anmeldung : **22.01.86 Patentblatt 86/04**

(45) Bekanntmachung des Hinweises auf die Patenterteilung : **30.09.87 Patentblatt 87/40**

(84) Benannte Vertragsstaaten : **AT BE CH DE FR GB IT LI NL SE**

(56) Entgegenhaltungen :
**EP-A- 0 010 724**
**EP-A- 0 038 688**
**EP-A- 0 055 212**
**GB-A- 820 930**

(73) Patentinhaber : **BASF Aktiengesellschaft**
**Carl-Bosch-Strasse 38**
**D-6700 Ludwigshafen (DE)**

(72) Erfinder : **Gimpel, Juergen, Dr.**
**Osloer Weg 44**
**D-6700 Ludwigshafen (DE)**
Erfinder : **Guibins, Erich, Dr.**
**Ladenurger Strasse 80**
**D-6900 Heidelberg (DE)**
Erfinder : **Ley, Gregor, Dr.**
**In den Trankstuecken**
**D-6719 Wattenheim (DE)**

**EP 0 168 870 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Verfahren zur Herstellung eines für Beschichtungsmittel geeigneten Bindemittels auf Basis einer Kombination aus einer wäßrigen Primärdispersion eines Copolymerisats und einem wasserunlöslichen Polykondensat aus Phenolen und Aldehyden sowie die Verwendung dieser Bindemittel für lagerstabile Dispersionsfarben.

Beschichtungsmittel auf Basis einer Kombination aus Primärdispersionen und Phenolformaldehydharzen sind bekannt. So wird in der US-PS 3 538 972 ein Bindemittel für eine Textilbeschichtung beschrieben, bei der eine Primärdispersion mit einem Präkondensat eines Phenolharzes vermischt wird. Nach Zugabe weiteren Formaldehyds wird in basischem Milieu die Beschichtung ausgehärtet. In der US-PS 3 784 496 wird ein Bindemittel für eine Holzbeschichtung beschrieben, bei der eine Primärdispersion mit einem Präkondensat eines Phenolharzes vermischt wird. In den US-PS 3 944 703, US-PS 4 246 144 und US-PS 4 316 968 werden Bindemittel für Glasfaserbeschichtungen aus einem Präkondensat eines Phenolharzes und einer Primärdispersion beschrieben. Den DE-OS 17 20 301 und DE-OS 19 47 964 sind kautschukmodifizierte Novolake zu entnehmen. Der Kautschuklatex kann vor oder während der Reaktion des Aldehyds mit dem Phenol zugegeben werden. Als zweckmäßig wird jedoch angegeben, den Kautschuklatex nach Ende der Phenol/Aldehyd-Reaktion zuzufügen. Man erhält nach diesem Verfahren keine stabile Dispersionen sondern feste Novolakharze. In der EP-A-10 724 wird ein Verfahren zur Herstellung von Mischkondensationsprodukten auf Basis von Phenol oder Phenolderivaten und Butyraldehyd beschrieben, bei dem vor, während oder nach der Kondensation von Phenol und Butyraldehyd ein funktionelle Gruppen enthaltender thermoplastischer Kunststoff zugesetzt wird bei diesem Verfahren werden keine stabile Dispersionen, sondern feste Mischkondensationsprodukte erhalten. In der US-PS 4 316 827 wird ein Verfahren zur Herstellung gehärteter Harzteilchen beschrieben, wobei im wäßrigen Medium Phenole mit einem Aldehyd in Gegenwart eines basischen Katalysators, eines Schutzkolloids und eines Kautschuk-Latex umgesetzt und nach dem Ansäuern die Teilchen vom wäßrigen Medium abgetrennt werden. Als Kautschukdispersionen werden hier u. a. carboxylierte Butadien/Acrylnitril-, Styrol/Butadien- und Polyacrylat-Latices genannt. In der GB-B-820 930 ist ein Verfahren zur Herstellung von polymerem Material beschrieben, bei dem in Gegenwart einer wäßrigen, kolloidalen Dispersion eines vinylischen Füllers eine oder mehrere ethylenisch ungesättigte Monomere polymerisiert werden oder Amino oder Phenoplaste gebildet werden. All diese Verfahren zur Herstellung von Beschichtungsmitteln aus einer Kombination einer Primärdispersion und eines Polykondensates auf Basis von Phenol und Aldehyden liefern keine stabilen kolloidalen Gesamtsysteme. Sie sind daher zur Herstellung von Bindemittel für lagerstabile Dispersionsfarben nicht geeignet.

Der vorliegenden Erfindung lag die Aufgabe zugrunde, ein Verfahren zur Herstellung von Beschichtungsmitteln auf Basis einer Mischung einer Primärdispersion und eines wasserunlöslichen Polykondensats aus Phenolen und Aldehyden und/oder Ketonen aufzuzeigen, die über lange Zeit lagerstabil sind, Teilchengrößen unter 1 µm Ø besitzen und sich daher als Bindemittel für Dispersionsfarben eignen.

Es wurde gefunden, daß sich diese Aufgabe sehr vorteilhaft lösen läßt, wenn man die Herstellung des Phenolharzes aus seinen Komponenten direkt in der auspolymerisierten Primärdispersion vornimmt.

Gegenstand der vorliegenden Erfindung ist ein Verfahren zur Herstellung eines für Beschichtungsmittel geeigneten Bindemittels auf Basis einer im wesentlichen schutzkolloidfreien Kombination aus einer wäßrigen Primärdispersion eines Copolymerisats und einem wasserunlöslächen Polykondensat aus Phenolen und Aldehyden, das dadurch gekennzeichnet ist, daß die phenolischen Komponenten des Polykondensats zunächst mit einer wäßrigen Primärdispersion eines Copolymerisats, das Glycidyl-, Carbonyl-, N-Methylol-, N-Alkoxy- methyl-, Amino- und/oder Hydrazo-Gruppen sowie gegebenenfalls zusätzlich Hydroxyl- oder Carboxylgruppen enthält, vermischt werden und in diesem Gemisch dann die Polykondensation mit den Aldehyden unter üblichen Bedingungen mit einem Mischungsverhältnis Copolymerisat/Phenolharz von 99 : 1 bis 1 : 4, vorzugsweise 4 : 1 bis 1 : 1, durchgeführt wird.

Gegenstand der vorliegenden Erfindung ist außerdem die Verwendung der erfindungsgemäß hergestellten Bindemittel für Dispersionsfarben und als hitzehärtbares Bindemittel für die Metall-Lackierung.

Erfindungsgemäß wird die gegebenenfalls verdünnte Primärdispersion zunächst mit der phenolischen Komponente des Harzes versetzt und vorzugsweise bei erhöhter Temperatur, beispielsweise bei etwa 50 bis 150 °C, verrührt. Nach der Verteilung der phenolischen Komponente in der Primärdispersion erfolgen dann nach Zugabe entsprechender Aldehydmengen eine oder mehrere Kondensationsphasen, wobei je nach Reaktionsbedingungen novolak-, resol-, resitol- oder resitartige Harze erhalten werden. Überraschenderweise bleibt dabei das kolloidale Gesamtsystem erhalten und man erhält lagerstabile dünnflüssige Dispersionen, die Teilchengrößen < 1 µm Ø besitzen, praktisch keine organische Lösungsmittel enthalten und als Bindemittel für Dispersionsfarben geeignet sind.

Zu den für das erfindungsgemäße Verfahren einzusetzenden Aufbaukomponenten ist im einzelnen folgendes auszuführen.

Als wäßrige Primärdispersionen eines Copolymerisats, das Glycidyl-, Carbonyl-, N-Methylol-, N-Alkoxymethyl-, Amino- und/oder Hydrazogruppen sowie gegebenenfalls zusätzlich Carboxyl- oder Hydroxylgruppen enthält, eignen sich übliche Primärdispersionen, die Copolymerisate mit derartigen

Gruppen stabil dispergiert enthalten, insbesondere solche, die eine ausreichende Stabilität gegenüber pH-Wert-Änderungen sowie eine ausreichende Verträglichkeit mit der phenolischen Komponente des Polykondensatharzes aufweisen.

Die oben genannten funktionellen Gruppen im Copolymerisat der Primärdispersionen werden auf übliche Weise durch Einpolymerisieren entsprechender Monomerer, die diese funktionellen Gruppen tragen, erhalten.

Glycidylgruppen enthaltende Copolymerisate lassen sich z. B. durch Einpolymerisieren von Glycidylacrylat, Glycidylmethacrylat oder anderen olefinisch ungesättigten Glycidylverbindungen, wie sie beispielsweise durch Umsetzung von Di-, Tri- oder Tetraepoxidverbindungen mit Acrylsäure oder Methacrylsäure hergestellt werden können, erhalten.

Carbonylgruppen enthaltende Copolymerisate können durch Einpolymerisieren von ungesättigten Aldehyden und/oder Ketonen, wie z. B. Acrolein, Methacrolein, Crotonaldehyd, Formylstyrol, Vinylmethylketon, Methylisopropenylketon, Diacetonacrylat, Diacetonacrylamid und/oder Butandiol-1,4-acrylatacetylacetat erhalten werden.

N-Methylol- resp. N-Alkoxymethylgruppen können z. B. durch Einpolymerisieren entsprechender Monomeren wie N-Methylol (meth) acrylamid bzw. N-Butoxymethyl (meth) acrylamid in das Copolymere der Primärdispersionen eingebaut werden.

Aminogruppenhaltige Copolymerisate können durch Einpolymerisieren entsprechender aminogruppensubstituierter (Meth) acrylester oder (Meth) acrylamide, wie z. B. Dimethylaminoethyl (meth) acrylat, Diethylaminoethyl (meth) acrylat, Dimethylaminoethyl (meth) acrylamid, Diethylaminoethyl (meth) acrylamid, Dimethylaminopropyl (meth) acrylamid oder N-tert.-butylaminoethyl-(meth) acrylat erhalten werden. Aminogruppenhaltige Copolymerisate können auch durch polymeranaloge Umsetzung von z. B. glycidylgruppenenthaltenden Copolymerisaten mit Ammoniak, primären oder sekundären Aminen oder Alkanolaminen erhalten werden.

Hydrazogruppenhaltige Copolymerisate kann man beispielsweise durch Einpolymerisieren von carbonylgruppentragenden Monomeren der oben genannten Art und Umsetzung mit Hydrazin oder Dihydraziden, wie z. B. Adipinsäuredihydrazid erhalten.

Zusätzliche Carboxylgruppen lassen sich beispielsweise durch Einpolymerisieren von α,β-olefinisch ungesättigten Carbonsäuren, wie z. B. Acrylsäure, Methacrylsäure, Acrylamidoglykolsäure oder Crotonsäure oder olefinisch ungesättigten Dicarbonsäuren, wie Maleinsäure, Fumarsäure, Itaconsäure oder entsprechenden Dicarbonsäuremonoestern, wie z. B. Maleinsäure- oder Fumarsäuremonoalkylestern mit 1 bis 4 Kohlenstoffatomen in den Alkylgruppen einführen.

Zusätzliche Hydroxylgruppen lassen sich beispielsweise durch Einpolymerisieren von Hydroxialkylacrylaten oder Hydroxialkylmethacrylaten mit 2 bis 8, vorzugsweise 2 bis 4 Kohlenstoffatomen in den Alkylgruppen, wie z. B. Hydroxiethyl-(meth) acrylat, Hydroxipropyl-(meth) acrylat, Butandiol-1,4-mono-(meth) acrylat oder von olefinisch ungesättigten Alkoholen, wie Allylalkohol einführen.

In den Copolymerisaten der wäßrigen Primärdispersionen können jeweils eine oder mehrere der genannten funktionellen Gruppen vorliegen.

Die Copolymerisate der wäßrigen Primärdispersionen enthalten die oben genannten funktionellen Gruppen im allgemeinen in solchen Mengen, daß sie 0,1 bis 50, vorzugsweise 0,3 bis 15, insbesondere 0,5 bis 10 Gew.-%, bezogen auf das Copolymerisat, dieser Monomeren mit funktionellen Gruppen einpolymerisiert enthalten.

Bevorzugte funktionelle Gruppen sind Glycidylgruppen, die z. B. durch Einpolymerisieren von 0,5 bis 60, vorzugsweise 2 bis 30, insbesondere 5 bis 15 Gew.-%, bezogen auf die Gesamtmenge der einpolymerisierten Monomeren, Glycidylmethacrylat in das erfindungsgemäß zu verwendende Copolymerisat der Primärdispersion eingeführt werden können.

Als Comonomere der Monomeren mit den oben genannten funktionellen Gruppen eignen sich die üblichen, damit copolymerisierbaren olefinisch ungesättigten Monomeren, wie z. B. die Ester der Acrylsäure und/oder Methacrylsäure mit 1 bis 12, vorzugsweise 1 bis 8 Kohlenstoffatome enthaltenden geradkettigen oder verzweigten Monoalkanolen, wie z. B. Methyl (meth-) acrylat, Ethyl(meth-) acrylat, Propyl (meth-) acrylat, Butyl (meth-) acrylat, 2-Ethyl-hexyl (meth-) acrylat und Lauryl (meth-) acrylat; Vinylester von 2 bis 4 Kohlenstoffatome enthaltenden Carbonsäuren, wie z. B. Vinylacetat und Vinylpropionat, Malein- bzw. Fumarsäuredialkylester von 1 bis 4 Kohlenstoffatome enthaltenden Monoalkanolen, Vinylaromaten, wie z. B. Styrol, α-Methylstyrol, Vinyltoluol; Acrylnitril, Methacrylnitril, in geringen Mengen von bis zu 5 Gew.% des Copolymeren Acrylamid, Methacrylamid sowie Vinylether mit 3 bis 10 Kohlenstoffatomen, Vinylhalogenide, wie Vinylchlorid und Vinylidenchlorid; mehrfach olefinisch ungesättigte Verbindungen, wie Butadien und Isopren, sowie Gemische der oben genannten Monomeren, soweit sie miteinander copolymerisierbar sind.

Bevorzugte Comonomere sind Acrylsäureester, Methacrylsäureester, (Meth-)-acrylnitril, Vinylchlorid, Vinylidenchlorid, Styrol und Butadien.

Die Herstellung der erfindungsgemäß zu verwendenden Primärdispersionen kann nach üblichen Methoden durch Emulsionspolymerisation der Monomeren in wäßriger Dispersion in Gegenwart von anionischen oder nichtionischen Emulgatoren, wie sie etwa in « H. Stache, Tensid-Taschenbuch », Karl Hanser-Verlag 1979 beschireben sind, z. B. Na-laurylsulfat, Na-dodecylbenzolsulfonat, Na-salze von sauren Schwefelsäureestern von Addukten aus Oktyl- oder Nonylphenol mit 5 bis 50 Mol Ethylenoxid,

Addukte von Oktyl- oder Nonylphenol mit 5 bis 50 Mol Ethylenoxid, Fettalkohol-Ethylenoxidaddukte, Gemische von anionischen und nichtionischen Emulgatoren, Polymerisationsinitiatoren, wie z. B. Peroxidisulfate bzw. Redoxsystemen, gegebenenfalls Puffersubstanzen, wie $K_2P_2O_7$ bei Temperaturen zwischen 30 und 150 °C erfolgen. Geeignete Methoden zur Emulsionspolymerisation von Monomerengemischen sind beispielsweise in Houben-Weyl, Methoden der organischen Chemie, Band 14/1 beschrieben.

Es ist vorteilhaft, wenn die Primärdispersionen über eine ausreichende Stabilität, insbesondere gegenüber pH-Wert-Änderungen verfügen. Eine gewisse Verträglichkeit der phenolischen Bausteine des Polykondensats mit den Polymerteilchen ist ebenfalls von Vorteil.

Als phenolische Komponenten für das erfindungsgemäß in der wäßrigen Primärdispersion herzustellende Phenolharz können z. B. folgende Phenole verwendet werden : Phenol, alkylsubstituierte Phenole mit 1 bis 12 Kohlenstoffatomen in der Alkylgruppe, wie Octyl-, Nonyl-, Dodecylphenol, arylsubstituierte Phenole wie z. B. 2-Hydroxy-biphenyl, 4-Hydroxy-biphenyl, Bisphenole der allgemeinen Formel

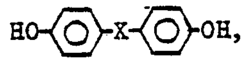

worin X einen (verzweigten) Alkylrest mit 1 bis 12, vorzugsweise 3 bis 7 Kohlenstoffatomen oder auch $—SO_2$- bedeutet, insbesondere Bisphenol A und Bisphenol S oder deren Mischungen. Bevorzugt sind Bisphenol A und Bisphenol S, insbesondere Gemische von Bisphenol A mit Bisphenol S, alkylsubstituierten Phenolen und/oder Hydroxybiphenyl.

Die erfindungsgemäß einzusetzenden phenolischen Komponenten sollen vorzugsweise nicht oder nur wenig wasserlöslich sein, d. h. eine Löslichkeit von weniger als 10 g/100 g Wasser bei 20 °C und pH $< 5$ aufweisen.

Als Aldehyde für die Kondensation kommen Formaldehyd, Acetaldehyd sowie ihre oligomeren Formen, Acrolein und Dialdehyde wie Glutardialdehyd, in Betracht. Bevorzugt sind Formaldehyd, Paraformaldehydhyd und Acetaldehyd für die Polykondensation.

Das molare Verhältnis der phenolischen Komponente zu Carbonylgruppen der Aldehyde kann zwischen etwa 1 : 0,8 bis 1 : 3 variiert werden. Bevorzugt ist ein Verhältnis von 1 : 1,5 bis 1 : 2,5. Besonders bevorzugt ist ein Verhältnis von etwa 1 : 2.

Gemäß dem erfindungsgemäßen Verfahren wird zunächst die phenolische Komponente mit der wäßrigen Primärdispersion, beispielsweise unter Rühren, vorzugsweise bei 50 bis 150 °C, gegebenenfalls unter Druck vermischt. Die phenolischen Komponenten können in fester oder flüssiger Form zur wäßrigen Primärdispersion zugegeben werden, wobei gegebenenfalls die Temperatur zum Zeitpunkt der Zugabe niedriger ist als bei den nachfolgenden Einmischen.

Die Kondensation von phenolischer Komponente mit Aldehyd zur Bildung des Polykondensats in der wäßrigen Primärdispersion kann bei Temperaturen zwischen Raumtemperatur und etwa 200 °C, gegebenenfalls unter Druck, vorzugsweise zwischen 50 und 100° bei den « natürlichen » pH-Wert der Primärdispersion, gegebenenfalls auch unter Zusatz von sauren oder basischen Katalysatoren wie anorganischen oder organischen Säuren, Ammoniak oder Aminen durchgeführt werden. Abhängig von den Kondensationsbedingungen und den verwendeten Katalysatoren werden unterschiedlich reaktive Harze gewonnen. Bisweilen ist es günstig, die Kondensation zunächst bei den meist sauren « natürlichen » pH-Wert der Primärdispersion oder unter Zusatz saurer Katalysatoren zu beginnen und dann später nach Neutralisation im alkalischen Bereich bei pH-Werten von 8 bis 10 fortzusetzen. Das Mischungsverhältnis Copolymerisat/Phenolharz kann von 99 : 1 bis ca. 1 : 4 variiert werden, bevorzugt ist ein Mischungsverhältnis von 4 : 1 bis 1 : 1 ; die obere Grenze für das Verhältnis Phenolharz/Copolymer der Primärdispersion ist durch das Auftreten neuer Teilchenpopulationen aus reinem Phenolharz gegeben, die stets erheblich größere Teilchendurchmesser (Ø $> 10\ \mu$) besitzen und — besonders bei basisch katalysierten Harzen — bereits in Mengen von wenigen Gewichtsprozenten eine deutliche Trübung des reinen Bindemittelfilms hervorrufen. Der Feststoffgehalt der phenolharzhaltigen Dispersion kann zwischen 10 und 70 Gew.-%, vorzugsweise zwischen 30 und 60 Gew.-% liegen.

Die erfindungsgemäß hergestellten phenolharzhaltigen Bindemitteldispersionen sind lagerstabil und werden im allgemeinen als Bindemittel für Beschichtungsmittel eingesetzt. Bevorzugt ist ihr Einsatz als Bindemittel für hitzehärtbare Metallbeschichtungen, die über eine gute Wasserfestigkeit, guten Korrosionsschutz, gute Chemikalienbeständigkeit, gute Haftung, hohen Glanz und gute mechanische Eigenschaften auf nicht vorbehandeltem Stahlblech, zinkphosphatiertem oder eisenphosphatiertem Stahlblech oder einem mit einer Elektrotauchlack-Grundierung beschichteten Stahlblech verfügen. Diese Beschichtungen werden im allgemeinen bei Temperaturen zwischen 100 und 200, vorzugsweise 150 bis 180 °C eingebrannt.

Die erfindungsgemäß hergestellten Bindemittel eignen sich insbesondere als Bindemittel für Dispersionsfarben oder als hitzehärtbares Bindemittel für die Metall-Lackierung.

Die in den Beispielen genannten Teile und Prozente sind, soweit nicht anders angegeben, Gewichtsteile bzw. Gewichtsprozente.

A. Herstellung der Primärdispersion

In einem Witt'schen-Topf mit Thermostat, Rührer, Rückflußkühler, diversen Zulaufgefäßen, Thermometer und Stickstoffeinleitung werden vorgelegt :

32,1 Teile VE-Wasser (= vollentsalztes Wasser)

als Zulauf I dient eine Mischung aus

14,4 Teilen VE-Wasser,
2,14 Teilen einer 35 %igen wäßrigen Lösung des Salzes eines schwefelsauren Halbesters eines Anlagerungsproduktes von ca. 25 Mol Ethylenoxid an Octylphenol.

17,55 Teile n-Butylacrylat,
10,35 Teile Styrol,
9,9 Teile Methylmethacrylat,
5,4 Teile Glycidylmethacrylat,
1,8 Teile Acrylsäure.

In Zulaufgefäß II wird eine Lösung von 0,225 Teilen Kaliumperoxidsulfat in 6 Teilen Wasser bereitet. Der Reaktor wird gründlich mit Stickstoff gespült. Die Vorlage wird auf 85 °C aufgeheizt, 5 % des Zulaufs II zugegeben und dann Zulauf I und Zulauf II innerhalb von 2 1/4 Stunden nebeneinander kontinuierlich dem Reaktor zudosiert. Man hält die Temperatur noch 1 Stunde bei 85 °C und kühlt dann ab.

Man erhält eine Dispersion mit einem Feststoffgehalt von ca. 46 %, einen pH-Wert von etwa 2,2 und einen LD-Wert von ca. 50, entsprechend einem mittleren Teilchendurchmesser von ungefähr 250 nm (= Primärdispersion A).

B. Herstellung der phenolharzhaltigen Dispersionen

Beispiel 1

In einer Apparatur wie oben beschrieben werden 200 Teile der oben hergestellten Primärdispersion, 50 Teile Wasser, 25 Teile Bisphenol A und 25 Teile Octylphenol techn. vorgelegt und unter Rühren auf 90 °C erhitzt. Nach 1 1/2 stündigem Rühren bei dieser Temperatur werden 40 Teile einer 37 %igen wäßrigen Formalinlösung zugegeben und der Ansatz mit Hilfe von ca. 30 Teilen konzentrierten wäßrigen Ammoniaks auf pH 8,5 eingestellt. Man kondensiert 3 Stunden bei 90 °C unter Rühren und kühlt dann ab.

Man erhält eine dünnflüssige Dispersion mit einem Feststoffgehalt von ca. 43 %, einem pH-Wert von 10,3 und einem LD-Wert von ca. 32. Ein aus der Dispersion auf einer Glasplatte hergestellter, ca. 70 µm starker Film ist nach dem Einbrennen (bei 180 °C 30 Minuten) klar durchsichtig, leicht gelb gefärbt, wasser- und lösungsmittelbeständig und besitzt eine Ritzhärte von ca. 3 H (Bleistifthärteskala). Die Dispersion ist bei Raumtemperatur (= ca. 20 °C) 6 Monate lagerstabil.

Beispiel 2

In der oben geschilderten Apparatur werden vorgelegt : 200 Teile der Primärdispersion, 50 Teile VE-Wasser, 25 Teile Bisphenol A sowie 25 Teile 4-Hydroxi-biphenyl. Die Mischung wird 1 1/2 Stunden bei 90 °C verrührt. Dann gibt man 40 Teile einer 37 %igen wäßrigen Formaldehyd-Lösung und 6,6 Teile Dimethylethanolamin zu und kondensiert das Harz 3 Stunden lang bei 90 °C.

Man erhält eine dünnflüssige Dispersion mit einem Feststoffgehalt von ca. 42 %, einem pH-Wert von etwa 9 und einem LD-Wert von ca. 50. Ein aus der Dispersion hergestellter Film auf Glas ist nach dem Einbrennen (30 Minuten bei 180 °C) schwach gelb gefärbt, wasser- und lösungsmittelbeständig, klar und besitzt eine Bleistifthärte von ca. 2H. Die Dispersion ist bei Raumtemperatur 6 Monate lagerstabil.

Beispiel 3

In der oben geschilderten Apparatur werden vorgelegt : 200 Teile der Primärdispersion, 50 Teile VE-Wasser, 31,5 Teile Bisphenol A und 18,5 Teile Phenol. Die Mischung wird 1 1/2 Stunden bei 90 °C verrührt, sodann gibt man 37 Teile einer 37 %igen wäßrigen Formalinlösung, 13,8 Teile Paraformaldehyd und 3,42 Teile Dimethylethanolamin hinzu. Es wird 6 Stunden bei 60 °C kondensiert. Man erhält eine dünnflüssige Dispersion mit einem Feststoffgehalt von ca. 42 % und einem pH-Wert von etwa 6,5. Die Dispersion ist bei Raumtemperatur 6 Monate lagerstabil.

Vergleichsbeispiel 1

Herstellung des Phenolharzes

11,2 Teile Wasser und 11,2 Teile Ethylenglykol werden mit etwas Schwefelsäure auf pH = 2,2 eingestellt. Dann gibt man 11,2 Teile Bisphenol A und 11,2 Teile Octylphenol techn. hinzu. Die Phenole werden bei 90 °C gelöst, dann mit 22,1 Teilen wäßriger 30 %iger Formalinlösung versetzt und mit konzentriertem wäßrigen Ammoniak auf pH 8,5 eingestellt. Man kondensiert 3 Stunden bei 90 °C unter Rühren.

Herstellung der Mischung

Das obige Phenolharz wird bei 90 °C mit 90 Teilen der Primärdispersion A versetzt. Es wird unter Rühren abgekühlt. Nach dem Abkühlen trennen sich Phenolharz und Primärdispersion sofort in 2 Phasen.

Vergleichsbeispiel 2

11,2 Teile Wasser und 11,2 Teile Ethylenglykol werden mit etwas Schwefelsäure auf pH = 2,2 eingestellt. Dann gibt man 11,2 Teile Bisphenol A und 11,2 Teile 4-Hydroxi-biphenyl hinzu. Die Phenole werden bei 90 °C gelöst, dann mit 22,1 Teilen wäßriger 30 %iger Formalinlösung und 3 Teilen Dimethylethanolamin versetzt. Man kondensiert 3 Stunden bei 90 °C unter Rühren.

Wie bei Vergleichsbeispiel 1 wird die Mischung aus Phenolharz und Primärdispersion hergestellt. Man erhält eine hochviskose Dispersion mit einem Feststoffgehalt von ca. 47 %, einem pH-Wert von etwa 9 und einem LD-Wert von ca. 50.

Vergleichsbeispiel 3

146,8 Teile Phenol, 364,5 Teile wäßrige 30 %ige Formalinlösung, 186,5 Teile Ethylglykol, 109,9 Teile Paraformaldehyd und 250,7 Teile Bisphenol A werden unter Zusatz von 27,2 Teilen Dimethylethanolamin bei 60 °C 6 Stunden unter Rühren kondensiert. Danach wird bei 40 °C Innentemperatur unter Vakuum auf einen Feststoffgehalt von 51 % aufkonzentriert.

55,4 Teile dieses Phenolharzes werden bei 90 °C mit 73 Teilen der Primärdispersion A versetzt. Es wird unter Rühren abgekühlt. Man erhält als Mischung eine hochviskose Dispersion mit einem Feststoffgehalt von ca. 48 % und einem pH-Wert von ca. 6,5, die nach 4 Tagen Lagerung bei 25 °C durchvernetzt und nicht mehr fließfähig ist.

Die folgende Tabelle gibt die Eigenschaften von Filmen wieder, die aus den Dispersionen der Beispiele 1 bis 3 und der Vergleichsbeispiele 1 bis 3 hergestellt wurden.

Der Zusatz von Ethylenglykol als Lösungsvermittler in den Vergleichsbeispielen war notwendig um die Phenolharze herstellen zu können ; d. h. ohne Ethylenglykol-Zusatz erhält man inhomogene nicht dispergierbare Phenolharze.

Andererseits ist der Zusatz von Ethylenglykol in den erfindungsgemäßen Beispielen nicht notwendig, wirkt sich jedoch auch nicht negativ aus.

Tabelle

| | Beispiel Nr. | | | Vergleichsbeispiel Nr. | | |
|---|---|---|---|---|---|---|
| | 1 | 2 | 3 | 1 | 2 | 3 |
| Einbrennbedingungen [min/°C] | 30/180 | 30/180 | 30/180 | 30/180 | 30/180 | 30/180 |
| Schichtdicke [µm] | 12 | 15 | 13 | 12 | 15 | 13 |
| Pendelhärte DIN 53157 [sec] | 200 | 200 | 190 | 150 | 150 | 170 |
| E-Tiefung DIN 53156 [mm] | 10 | 10 | 10 | 9 | 9 | 9 |
| Glanz (60 %) DIN 67530 [%] | 100 | 100 | 96 | 40 | 45 | 80 |
| Lagerstab. bei 25°C in Tagen | 180 | 180 | 180 | 1 | 10 | 4 |
| Korrosionsschutz DIN 53167 [Tage/mm. Unterwanderung] | 1/20 | 2/15 | 2/5 | 1/25 | 2/25 | 2/5 |

Beispiel 4

Herstellung und « Resolierung » einer aminogruppenhaltigen Primärdispersion

240 Teile der Primärdispersion A werden mit 24 Teilen Wasser und 2 Teilen 25 %igem Ammoniakwasser versetzt, auf 90 °C aufgeheizt und 30 Minuten bei dieser Temperatur verkocht. Die erhaltene $NH_2$-Gruppen haltige Primärdispersion wird mit 60 Teilen Bisphenol A versetzt und 90 Minuten bei 90 °C

verrührt ; dann werden 48 Teile einer 37 %igen Formaldehydlösung zugegeben sowie nach weiteren 30 Minuten 5,3 Teile Dimethylethanolamin. Nach weiteren 5 Stunden Kondensieren bei 70 °C erhält man eine schwach gelbgefärbte, dünnflüssige, lagerstabile Dispersion mit einem Feststoffgehalt von ca. 47 Gew.%, einem pH-Wert von ca. 8,4 und einer mittleren Teilchengröße $\overline{d}_{ns}$ von etwa 250 nm.

Beispiel 5

Herstellung und « Resolierung » einer N-Methylolgruppen-haltigen Primärdispersion

Man stellt nach der in Beispiel 1 der DE-OS 22 13 756 gegebenen Vorschrift eine N-Methylolgruppenhaltige Primärdispersion her.

In einem Reaktor, der mit Inertgaszuleitung, Rührer und Zulaufgefäß versehen ist, wird eine Mischung aus 700 Teilen Wasser, 30 Teilen eines Adduktes aus 1 Mol n-Octylphenol und 23 Molen Ethylenoxid und 9 Teilen des sulfatierten und mit Natronlauge neutralisierten Adduktes aus n-Octylphenol und 23 Teilen Ethylenoxid unter Inertgas und unter Rühren auf 87 °C erwärmt. Diese Vorlage wird bei 85 °C mit einer Lösung von 0,5 Teilen Kaliumpersulfat in 12 Teilen Wasser versetzt. Bei 87 °C wird eine Primäremulsion aus 660 Teilen Styrol, 520 Teilen 2-Ethylhexylacrylat, 20 Teilen Acrylnitril, 13 Teilen Acrylsäure, 10 Teilen N-Methylolmethacrylamid, 1 Teil Diallylphthalat, 5 Teilen Natrium-dodecylbenzolsulfonat, 10 Teilen des Natriumsalzes des Adduktes aus n-Octylphenol und 23 Mol Ethylenoxid, 0,1 Teilen Ammoniumcarbonat und 770 Teilen Wasser (= Zulauf I) gleichmäßig in drei Stunden in den Polymerisationsreaktor eingefahren. Gleichzeitig läßt man eine Lösung aus 4,5 Teilen Kaliumpersulfat in 110 Teilen Wasser in den Reaktor zulaufen (= Zulauf II). Zwei Stunden nach Zulaufende ist die Polymerisation bei 87 °C bis zu 98,5 % Umsatz abgelaufen. Nach dem Abkühlen der entstandenen feinteiligen Polymerisat-Dispersion stellt man mit Ammoniak auf pH 8. Die Polymerisat-Dispersion hat einen Feststoffgehalt von 44 %.

240 Teile dieser Dispersion werden mit einer Mischung aus 2,6 Teilen Dimethylethanolamin in 24 Teilen Wasser auf etwa pH 7,5 eingestellt, auf 90 °C aufgeheizt und mit 60 Teilen Bisphenol S 90 Minuten verrührt. Man gibt 50 Teile 37 %ige wäßrige Formaldehydlösung und nach weiteren 15 Minuten 5,5 Teile Dimethylethanolamin zu und kondensiert 3 Stunden lang bei 90 °C. Man erhält eine nicht verfärbte dünnflüssige lagerstabile Dispersion mit einem Feststoffgehalt von ca. 44 Gew.% und einem pH-Wert von ca. 8.

Beispiel 6

Herstellung und « Resolierung » einer Carbonylgruppen-haltigen Primärdispersion

Man stellt nach der in der DE-OS 28 19 092, Beispiel 1, gegebenen Vorschrift eine Carbonylgruppenhaltige Primärdispersion her.

In einem Wittschen Topf mit Thermostat, Ankerrührer, Rückflußkühler, Zulaufgefäßen, Thermometer und Stickstoffeinleitung werden vorgelegt :

1 050 Teile Wasser

13,5 Teile einer 35 %igen wäßrigen Lösung des Natriumsalzes eines Schwefelsäurehalbesters eines mit 20 Mol Ethylenoxid umgesetzten p-Nonylphenols (anionischer Emulgator)

45 Teile einer 20 %igen Lösung eines mit 25 Mol Ethylenoxid (nicht ionischer Emulgator) umgesetzten p-Nonylphenols.

Als Zulauf I dient eine Mischung aus :

504 Teilen Wasser
66 Teilen einer 35 %igen Lösung des oben angegebenen anionischen Emulgators
880 Teilen Methylmethacrylat
850 Teilen n-Butylacrylat
95 Teilen Acrolein
20 Teilen Acrylsäure
30 Teilen Acrylamid

Im Zulaufgefäß wird eine Lösung von 7,5 Teilen Kaliumpersulfat in 180 Teilen Wasser bereitet.

Der Reaktor wird gründlich mit Stickstoff gespült. Dann werden 10 % des Zulauf I zur Vorlage gegeben und die Mischung auf 90 °C erwärmt. Es werden 10 % des Zulauf II in einem Guß in den Reaktor gegeben und dann die Zuläufe I und II gleichmäßig nebeneinander in 3 bzw. 3,5 Stunden dem Reaktor zugefahren. Nach Zulaufende wird die Temperatur noch 1 1/2 Stunden bei 90 °C gehalten, der Reaktor dann auf Raumtemperatur abgekühlt.

Nach dem Abkühlen der Dispersion stellt man mit Dimethylethanolamin auf pH 7 ein. Zu 200 Teilen dieser Primärdispersion gibt man 20 Teile $H_2O$ und 50 Teile Bisphenol A, heizt auf 90 °C und verrührt den Ansatz 2 Stunden lang. Dann gibt man 40 Teile einer 37 %igen wäßrigen Formaldehydlösung und nach

weiteren 2 Stunden 6 Teile 2-Amino-2-methyl-propanol-1 zu. Nach weiteren 3 Stunden Kondensation bei 90 °C kühlt man ab und erhält eine kaum verfärbte dünnflüssige lagerstabile Dispersion mit einem Feststoffgehalt von ca. 47 Gew.%, einem pH-Wert von 8,5 und einer mittleren Teilchengröße $\bar{d}_{ns} \approx 200$ nm.

**Patentansprüche**

1. Verfahren zur Herstellung eines für Beschichtungsmittel geeigneten Bindemittels auf Basis einer im wesentlichen schutzkolloidfreien Kombination aus einer wäßrigen Primärdispersion eines Copolymerisats und einem wasserunlöslichen Polykondensat aus Phenolen und Aldehyden, dadurch gekennzeichnet, daß die phenolischen Komponenten des Polykondensats zunächst mit einer wäßrigen Primärdispersion eines Copolymerisats, das Glycidyl-, Carbonyl-, N-Methylol-, N-Alkoxymethyl-, Amino- und/oder Hydrazo-Gruppen sowie gegebenenfalls zusätzlich Carboxyl- oder Hydroxylgruppen enthält, vermischt werden und in diesem Gemisch dann die Polykondensation mit den Aldehyden unter üblichen Bedingungen mit einem Mischungsverhältnis Copolymerisat/Phenolharz von 99 : 1 bis 1 : 4, vorzugsweise 4 : 1 bis 1 : 1, durchgeführt wird.

2. Verfahren nach Anspruch 1, dadurch gekennzeichnet, daß als phenolische Komponenten solche verwendet werden, die eine Löslichkeit von weniger als 10 g in 100 g Wasser von 20 °C bei $pH < 5$ aufweisen.

3. Verfahren nach einem der vorhergehenden Ansprüche, dadurch gekennzeichnet, daß als phenolische Komponenten Bisphenol A oder dessen Gemische mit Phenol, alkylsubstituierten Phenolen und/oder Hydroxybiphenyl verwendet werden.

4. Verfahren nach einem der vorhergehenden Ansprüche, dadurch gekennzeichnet, daß als wäßrige Primärdispersionen eines Copolymerisats solche verwendet werden, die Glycidylacrylat oder Glycidylmethacrylat einpolymerisiert enthalten.

5. Verfahren nach einem der vorhergehenden Ansprüche, dadurch gekennzeichnet, daß als Aldehyde für die Polykondensation Formaldehyd oder Paraformaldehyd, Acetaldehyd oder deren Gemische verwendet werden.

6. Verwendung der nach einem Verfahren gemäß einem der vorhergehenden Ansprüche hergestellten Bindemittel als Bindemittel für Dispersionsfarben.

7. Verwendung der nach einem Verfahren gemäß einem der Ansprüche 1 bis 5 hergestellten Bindemittel als hitzehärtbares Bindemittel für die Metall-Lackierung.

**Claims**

1. A process for the preparation of a binder which is suitable for coating agents and based on a combination which is essentially free of protective colloids and consists of an aqueous primary dispersion of a copolymer and a water-insoluble polycondensate of phenols and aldehydes, wherein the phenolic components for the polycondensate are first mixed with an aqueous primary dispersion of a copolymer which contains glycidyl, carbonyl, N-methylol, N-alkoxymethyl, amino and/or hydrazo groups and may furthermore contain carboxyl or hydroxyl groups, and the polycondensation with the aldehydes is then carried out under conventional conditions, the ratio of copolymer to phenolic resin in the mixture being from 99 : 1 to 1 : 4, preferably from 4 : 1 to 1 : 1.

2. A process as claimed in claim 1, wherein the phenolic component used is one which has a solubility of less than 10 g in 100 g of water at 20 °C and $pH < 5$.

3. A process as claimed in any of the preceding claims, wherein the phenolic component used is bisphenol A or a mixture thereof with phenol, an alkyl-substituted phenol and/or hydroxybiphenyl.

4. A process as claimed in any of the preceding claims, wherein the aqueous primary dispersion of a copolymer which is used is one which contains glycidyl acrylate or glycidyl methacrylate as copolymerized units.

5. A process as claimed in any of the preceding claims, wherein the aldehyde used for the polycondensation is formaldehyde, paraformaldehyde, acetaldehyde or a mixture thereof.

6. The use of a binder prepared by a process as claimed in any of the preceding claims as a binder for emulsion paints.

7. The use of a binder prepared by a process as claimed in any of claims 1 to 5 as a heat-curable binder for metal coating.

**Revendications**

1. Procédé de préparation d'un liant convenant pour agent d'enduction, à base d'une combinaison, en principe exempte de colloïde protecteur, d'une dispersion primaire aqueuse d'un copolymérisat et d'un polycondensat insoluble dans l'eau, de phénols et aldéhydes, caractérisé par le fait que les

composants phénoliques du polycondensat sont, d'abord, mélangés avec une dispersion primaire aqueuse d'un copolymérisat qui contient des groupes glycidyle, carbonyle, N-méthylol, N-alcoxyméthyle, amino et/ou hydrazo, ainsi qu'éventuellement, en plus, des groupes carboxyle ou hydroxyle et, dans ce mélange, on effectue alors la polycondensation avec des aldéhydes, dans les conditions usuelles, avec un rapport de mélange, copolymérisat/résine phénolique, de 99/1 à 1/4, avantageusement de 4/1 à 1/1.

2. Procédé selon la revendication 1, caractérisé par le fait que, comme composants phénoliques, on utilise ceux qui possèdent une solubilité inférieure à 10 g dans 100 g d'eau de 20 °C à un pH < 5.

3. Procédé selon l'une des revendications précédentes, caractérisé par le fait que l'on utilise, comme composants phénoliques, du bisphénol A ou son mélange avec du phénol, des phénols alkylsubstitués et/ou de l'hydroxybiphényle.

4. Procédé selon l'une des revendications précédentes, caractérisé par le fait que l'on utilise, comme dispersions primaires aqueuses d'un copolymérisat, celles qui contiennent, en polymérisation, de l'acrylate ou méthacrylate de glycidyle.

5. Procédé selon l'une des revendications précédentes, caractérisé par le fait que l'on utilise, comme aldéhyde pour la polycondensation, du formaldéhyde ou paraformaldéhyde, de l'acétaldéhyde ou leurs mélanges.

6. Utilisation du liant, préparé par un procédé selon l'une des revendications précédentes, comme liant pour couleurs de dispersion.

7. Utilisation du liant, préparé par un procédé selon l'une des revendications précédentes, comme liant durcissable à chaud pour le laquage de métal.